# EUROPÄISCHE PATENTSCHRIFT

(11) **EP 2 177 338 B1**
(45) Veröffentlichungstag und Bekanntmachung des Hinweises auf die Patenterteilung: **08.02.2012**
(21) Anmeldenummer: 09012308.4
(22) Anmeldetag: 29.09.2009
(51) Int. Cl.: B29C 45/27, H05B 3/42, G01K 1/14, B29C 45/73, B29C 45/78

(54) **Rohrförmiges Heizelement mit Temperaturfühler**
Tubular heating element with temperature probe
Elément de chauffage tubulaire doté d'un capteur de température

(30) Priorität: 15.10.2008 DE 202008013626 U
(43) Veröffentlichungstag der Anmeldung: 21.04.2010
(73) Patentinhaber: Türk + Hillinger GmbH, D-78532 Tuttlingen (DE)
(72) Erfinder: Schlipf, Andreas, 78532 Tuttlingen (DE)
(74) Vertreter: Patentanwälte Westphal, Mussgnug & Partner

(56) Entgegenhaltungen:
- WO-A-2007/121823
- DE-U1-202006 018 576
- GB-A- 2 295 758

## Beschreibung

Die Erfindung betrifft ein Heizelement, insbesondere für metallene Kunststoffspritzdüsen oder dgl., bestehend aus einem rohrartigen Hohlkörper aus Metall, der ein zu beheizendes Maschinenteil, insbesondere den Düsenkörper einer Spritzgießeinrichtung, mit seiner Rohrwand wärmeübertragend umschließt und der in seiner äußeren und/oder inneren Mantelfläche eine oder mehrere zumindest abschnittweise gewindeartig verlaufende Nuten mit eingelegtem(n) und/oder eingepresstem(n) Rohrheizkörper(n) aufweist, deren elektrische Anschlüsse vom Hohlkörper wegragen, und mit einem Thermoelement als Temperaturfühler, das in einer Führungsnut der Rohrwand geführt ist und dessen Fühlerspitze in einem Endbereich der Rohrwand so angeordnet ist, dass sie mit der Kunststoffspritzdüse in thermischem Kontakt steht.

Branchenüblich werden derartige Heizelemente als Hohlpatronen bezeichnet. Sie sind mit einer Rohrwendelpatrone ausgestattet, welche in Umfangsnuten eines Messingrohrs oder CrNi-Stahlrohrs eingepresst ist. Die Umfangsnuten und die in diese eingepresste Rohrwendelpatrone verlaufen in der Regel gewindeartig mit unterschiedlichen Steigungen, damit eine adäquate Temperaturverteilung entlang des zu beheizenden Bauelementes eingestellt werden kann. Bei einem solchen Bauelement kann es sich beispielsweise um eine Kunststoffspritzdüse handeln. Um einen guten Wärmeübergang auf den Düsenkörper beispielsweise einer solchen Kunststoffspritzdüse zu erhalten, ist das Rohr mit einem passgenauen Innendurchmesser, d.h. mit einer Passbohrung versehen. Der Düsenkörper selbst, der auch "Materialrohr" genannt wird, kann mit einer ein-, zwei- oder mehrschichtigen Rohrwand versehen sein.

Aus DE 20 2006 018 576 U1 ist bereits eine Heißkanaldüse für eine als Spritzgießwerkzeug ausgebildete Spritzgießeinrichtung bekannt, bei der ein auf das Materialrohr des Düsenkörpers aufgeschobener rohrartiger Hohlkörper aus Metall mit einem in Umfangsnuten eingepressten Rohrheizkörper vorgesehen ist. Dieser dort als Hülse bezeichnete Hohlkörper ist auch mit einem Temperaturfühler ausgestattet, der in einer separaten Umfangsnut untergebracht ist und der als Temperaturregelung benötigt wird. Dabei ist die Rohrwand des Hohlkörpers bzw. der Hülse am einen Ende mit einer radialen Durchgangsöffnung versehen. Nach einer Ausführungsform ragt das freie Ende, also die Spitze des Temperaturfühlers, frei in diese Durchgangsöffnung und wird mit Hilfe einer wellenförmigen Klammer mit dem Materialrohr der Spritzdüse in Kontakt gebracht. Die beiden Enden der Klammer stützen sich dabei an den inneren Rändern der Durchgangsöffnung ab, während ihr Mittelteil den Temperaturfühler außenseitig umschließt.
Damit soll erreicht werden, dass das als Messpunkt dieende freie Ende des Temperaturfühlers nicht die Temperatur der beheizten Hülse bzw. des beheizten Hohlkörpers misst, sondern die Temperatur des Materialrohrs der Düse erfasst.

Eine andere Ausführung sieht vor, dass der Endabschnitt des Temperaturfühlers eine stirnseitige Ausnehmung der Hülse bzw. des Hohlkörpers durchragt. Dabei soll die Fixierung bzw. örtliche Befestigung durch Kleben, Löten od. dgl., oder aber auch mit einer Klammer erfolgen.

Aus der WO 2007/121823 ist ein Heizelement für metallene Kunststoffspritzdüsen bekannt, bestehend aus einem rohrartigen Hohlkörper aus Metall, der ein zu beheizendes Maschinenteil mit seiner Rohrwandwärmeübertragung umschließt und der in seiner äußeren und/oder inneren Mantelfläche eine oder mehrere zumindest abschnittsweise gewindeartig verlaufende Nuten mit eingelegtem und/oder eingepresstem Rohrheizkörper aufweist, deren elektrische Anschlüsse vom Hohlkörper wegragen und mit einem Kammerelement als Temperaturfühler, das in einer Führungsnut der Rohrwand geführt ist, und dessen Fühlerspitze in einem Endbereich der Rohrwand so anordenbar ist, dass sie mit der Materialwand der Kunststoffspritzdüse in thermischem Kontakt stehen kann. Diese Druckschrift offenbart weiter, dass die Fühlerspitze in einer ihren Umfang wenigstens größtenteils wärmeübertragend umschließenden Ausführung eines separaten Kontaktelements angeordnet ist, das räumlich allseitig von der Rohrwand getrennt in einem Wandausschnitt der Rohrwand angeordnet ist, wobei das Kontaktelement aus einem formbeständigen Werkstoff mit guter Wärmeleitfähigkeit, insbesondere einem Metall besteht.

Bei all diesen Ausführungsarten steht die gerundete Spitze bzw. das freie halbkugelförmige Ende des Temperaturfühlers nur durch Punkt- bzw. allenfalls durch Linienberührung mit dem Materialrohr der Düse in Kontakt, was messtechnisch wegen des geringeren Wärmeübergangs von Nachteil ist.

Der Erfindung liegt die Aufgabe zugrunde, ein Heizelement der eingangs genannten Art zu schaffen, bei dem die Anordnung der Spitze des Thermoelements örtlich so fixiert und thermisch so angeordnet ist, dass die zu regelnde Temperatur des Materialrohres beispielsweise einer Spritzgussdüse am immer gleichen Messpunkt weitgehend homogen und dem direkten Einfluss der Heizung der Rohrwendelpatrone weitgehend entzogen ist.

Da diese Heizelemente auch auf einfache Weise austauschbar sein sollen, ist auch wichtig, dass sich nach jedem Austausch eines solchen, sowohl mit einer Rohwendelpatrone als auch mit einem mit dem Thermoelement versehenen Hohlkörper wieder die thermischen Verhältnisse einstellen lassen, die vor dem Austausch bzw. vor dem Ausfall des ausgetauschten Heizelements geherrscht haben.

Gelöst wird diese Aufgabe erfindungsgemäß dadurch, dass die Fühlerspitze in einer nutartigen Ausnehmung eines Rohrwandabschnitts wärmeübertragend fixiert ist, der durch wenigstens zwei stirnseitige Einschnitte seitlich von der Rohrwand thermisch getrennt ist und der radial biegsam unter einer radialen Anpresskraft stehend mit flächenhaftem thermischem Kontakt spaltfrei am Düsenkörper anliegt.

Mit einer solchen Anordnung, die einen flächenhaften Temperaturkontakt am immer gleichen Messpunkt ermöglicht, lässt sich ein schnellerer, exakterer und zuverlässigerer Temperaturausgleich zwischen dem Materialrohr (beispielsweise einer Kunststoffspritzdüse) und dem Temperaturfühler sowie eine noch bessere Temperaturentkopplung zur beheizten Hülse bzw. zum Hohlkörper erreichen, in den der Rohrheizkörper räumlich und thermisch gekoppelt integriert ist.

Außerdem ist die Austauschbarkeit hinsichtlich der Gewährleistung gleicher Messparameter und somit der Erhaltung unveränderter Regelgrößen wesentlich zuverlässiger, weil die Lagerung und Fixierung der die zu messende Temperatur erfassenden Spitze des Temperaturfühlers sich durch den Austausch nicht oder allenfalls minimal ändert.

Bei einer weiteren, hinsichtlich der Erreichung konstanter Messparameter die gleichen Vorteile gewährleistenden Lösung ist vorgesehen, dass die Fühlerspitze in einer ihren Umfang wenigstens größtenteils wärmeübertragend umschließenden Ausnehmung eines separaten Kontaktelements angeordnet ist, das räumlich allseitig von der Rohrwand getrennt in einem Wandausschnitt der Rohrwand angeordnet ist, wobei das Kontaktelement aus einem formbeständigen Werkstoff mit guter Wärmeleitfähigkeit, insbesondere einem Metall, besteht und unter einer radialen Anpresskraft stehend mit flächenhaftem thermischem Kontakt spaltfrei am Umfang des Düsenkörper anliegt.

Für beide Lösungen gibt es mehrere vorteilhafte Ausführungsmöglichkeiten, die im einzelnen in den Unteransprüchen beschrieben und in der folgenden Beispielsbeschreibung anhand der Zeichnungen näher erläutert sind. Aus Gründen der einfacheren Darstellung ist in den Ausführungsbeispielen der Düsenkörper jeweils nur mit einer einfachen (einschichtigen) Rohrwand versehen. Die Übertragung der erfindungsgemäßen Ausführungen auf eine mehrschichtige Rohrwand ist ohne Weiteres möglich.

Von den Zeichnungen zeigt:
- Fig.1: in kompletter Seitenansicht ein rohrartiges, auf eine Heißkanaldüse bzw. eine Kunststoff- spritzdüse mit Passsitz aufgeschobenes Heizele- ment mit in Umfangsnuten eingelegtem Rohrheiz- körper und Thermoelement;
- Fig. 2: einen vergrößerten Ausschnitt II aus Fig. 1;
- Fig. 3: in vergrößerter Darstellung einen Schnitt III- III aus Fig. 2;

- Fig. 4: einen Ausschnitt IV aus Fig. 3;
- Fig. 5 und Fig. 6: die gleichen Ausschnitte IV aus Fig. 3, jedoch mit anderen Querschnittsformen der die Fühler- spitze aufnehmenden Ausnehmung;
- Fig. 7: den Gegenstand der Fig. 2 in 3D-Ansicht;
- Fig. 8: in der gleichen 3D-Ansicht wie Fig. 7 eine an- dere Ausführungsform des die Fühlerspitze auf- nehmenden Rohrwandabschnitts;
- Fig. 9: den Gegenstand der Fig. 8 in Draufsicht;
- Fig. 10: einen Teilschnitt X-X aus Fig. 9
- Fig. 11: eine Schnittdarstellung gemäß der Schnittlinie X-X des die Fühlerspitze aufnehmenden Rohrwand- abschnitts;
- Fig. 12: in 3D-Darstellung den Gegenstand der Fig. 2 und Fig. 7 mit einem Spannring;
- Fig. 13: den Hohlkörper mit dem Spannring aus Fig. 12 in Stirnansicht XIII;
- Fig. 14: in 3D-Ansicht den Gegenstand der Fig. 12 mit einer anderen Ausführungsform des die Fühler- spitze aufnehmenden Rohrwandabschnittes und ei- nem anderen Spannelement;
- Fig. 15: den der Darstellung der Fig. 2 entsprechenden unteren Abschnitt des rohrförmigen Heizelements mit einem anderen Spannelement für den die Füh- lerspitze aufnehmenden Rohrwandabschnitt;
- Fig. 16: einen Teilschnitt XVI-XVI aus Fig. 15 in ver- größerter Darstellung;
- Fig. 17: den Gegenstand der Fig. 15 in 3D-Ansicht mit anderen Ausnehmungen zur Aufnahme der Enden des Spannelements;
- Fig. 18: in 3D-Ansicht das Spannelement der Fig. 15 bis 17 als Einzelteil;
- Fig. 19: in 3D-Ansicht einen stirnseitigen Teil einer mit einem Ausschnitt versehenen Rohrwand des Heizelementes;
- Fig. 19a: in 3D-Ansicht ein in den Ausschnitt passendes Kontaktelement als Einzelteil mit eingesetzter Fühlerspitze;
- Fig. 19b: eine andere Ausführung des Kontaktelements aus Fig. 19a ebenfalls mit eingesetzter Fühlerspit- ze;
- Fig. 20: die gleiche Darstellung wie Fig. 19 mit einem in den Ausschnitt eingesetzten, die Fühlerspit- ze aufnehmenden Kontaktelement;
- Fig. 20a: das Kontaktelement aus Fig. 20 als Einzelteil in 3D-Darstellung;
- Fig. 21: den Rohrabschnitt aus Fig. 19 mit einem anderen Kontaktelement sowie einem Spannelement gemäß Fig. 18;
- Fig. 21a: das Kontaktelement aus Fig. 21 als Einzelteil;
- Fig. 22: den Gegenstand der Fig. 21 in Draufsicht;
- Fig. 23: einen Schnitt XXIII-XXIII aus Fig. 22;
- Fig. 24: eine Schnittdarstellung gemäß der Schnittlinie XXIII-XXIII aus Fig. 2, jedoch mit einer ande- ren Querschnittsform des Kontaktelements;
- Fig. 25: eine der Fig. 23 und 24 entsprechende Schnitt- darstellung einer anderen Querschnittsform des Kontaktelements und des Spannelements.

Das in den Zeichnungen dargestellte Heizelement 1, das in dieser dargestellten Ausführung in der Branche auch als Hohlpatrone bezeichnet wird, besteht aus einem rohrartigen, zylindrischen Hohlkörper 2 aus Metall, vorzugsweise aus Messing oder CrNi-Stahl. Auf seiner Umfangsfläche ist dieser Hohlkörper 2 mit gewindeartig und parallel zueinander verlaufenden Nuten 3 und 4 versehen, die, über die Länge des Hohlkörpers 2 verteilt, unterschiedliche Steigungen aufweisen. In den Endbereichen des Hohlkörpers 2 sind die Steigungen gering, im mittleren Bereich groß. In die zusammenhängende Nut 3 ist eine Rohrwendelpatrone 5 eingepresst, deren Anschlüsse 6 und 7 im oberen Bereich des Hohlkörpers 2 radial nach außen geführt sind. In die Nut 3 ist ein Thermoelement als Temperaturfühler 8 eingelegt, dessen Fühlerspitze 9 am einen Ende 10 des Hohlkörpers 2 in einer Ausnehmung 11 liegt.

Die beiden Anschlüsse 12 und 13 des Temperaturfühlers 8 sind mit den beiden Anschlüssen 6 und 7 der Rohrwendelpatrone 5 räumlich gemeinsam so geführt, dass sie radial vom Hohlkörper 2 wegragen.

Der Hohlkörper 2 ist mit einer Passbohrung 14 versehen, welche die Materialwand 15 einer mit einem Strömungskanal 16 versehenen Kunststoffspritzdüse 17 spaltfrei und wärmeübertragend aufnimmt. Dabei ist das Heizelement 1, d.h. der Hohlkörper 2 mit der Rohrwendelpatrone 5 und dem Temperaturfühler 8 auswechselbar so auf die Materialwand 15 der Kunststoffspritzdüse 17 aufgesetzt bzw. aufgeschoben, dass der Endabschnitt 10 des Hohlkörpers 2, in dem sich die Fühlerspitze 9 befindet, von dem mit Ausgangsöffnungen 18 versehenen, kegelförmigen Ende 19 der Kunststoffspritzdüse 17 einen genau definierten Abstand **a** aufweist, damit die während des Spritzvorganges an diesem Messpunkt der Kunststoffspritzdüse 17 herrschende Temperatur durch die Fühlerspitze 9 möglichst exakt erfasst und zur Temperaturregelung benutzt werden kann.

Die Ausnehmung 11, in welcher die Fühlerspitze 9 wärmeübertragend fixiert ist, befindet sich in einem Rohrwandabschnitt 20, der durch zwei stirnseitige Einschnitte 21 und 22 seitlich von der Rohrwand 2' des Hohlkörpers 2 thermisch getrennt ist. Durch diese beiden Einschnitte 21 und 22 erhält der Rohrwandabschnitt 20 mit seiner Ausnehmung 11 eine gewisse elastische Biegsamkeit, so dass er unter einer radialen Anpresskraft stehend mit flächenhaftem Kontakt spaltfrei am Düsenkörper, d.h. an der Materialwand 15 der Kunststoffspritzdüse 17 wärmeübertragend anliegt.

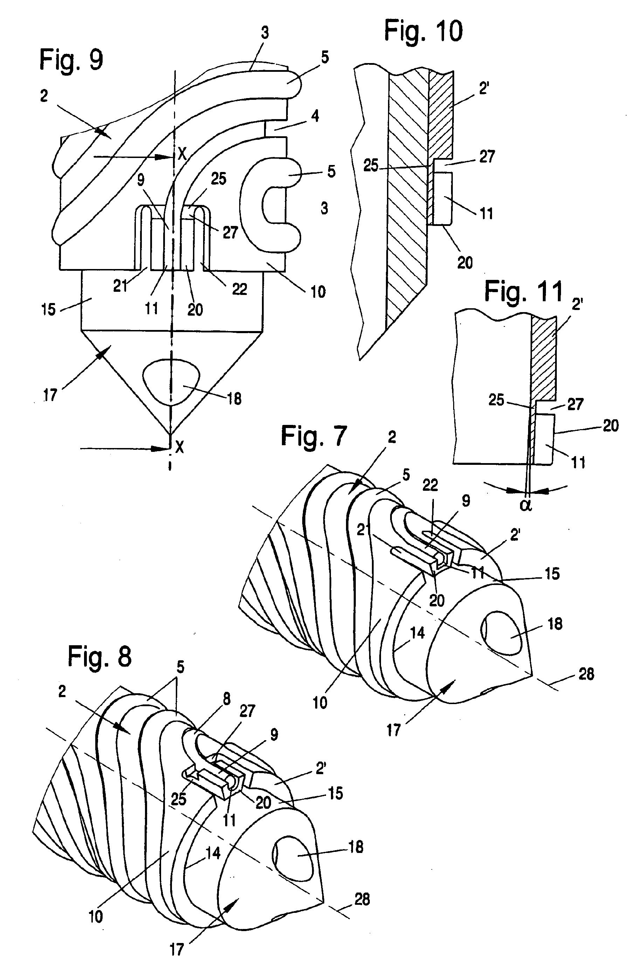

Dabei kann die radiale Anpresskraft auf verschiedene Weise erzeugt werden. So ist es beispielsweise möglich, wie in Fig. 11 dargestellt, den Rohrwandabschnitt 20 mit einem Spannwinkel α von etwa 2° bis 3° nach innen zu biegen, bevor der Hohlkörper 2 auf die Spritzgussdüse 17 bzw. die Rohrwand 2'aufgeschoben wird, so dass eine radiale Spannung, d.h. die gewünschte radiale Anpresskraft, wirksam wird.

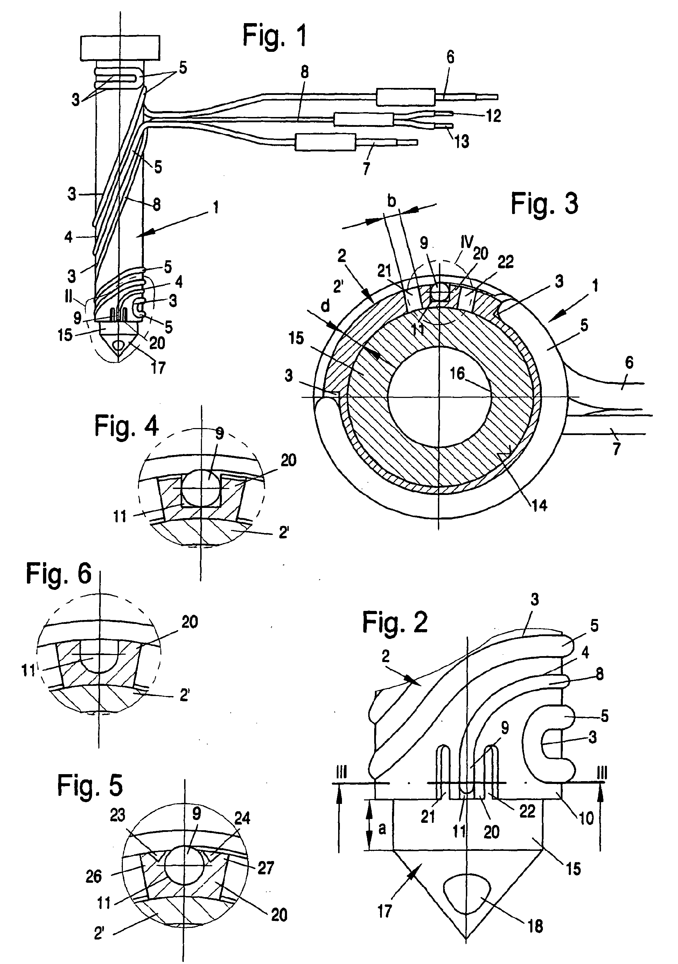

Bei dem in den Fig. 1 bis 7 dargestellten Ausführungsbeispiel bildet die Ausnehmung 11 eine axial verlaufende Fortsetzung und somit den Endabschnitt der in der Umfangsfläche der Rohrwand 2' verlaufenden Führungsnut 4 des Thermoelements bzw. Temperaturfühlers 8. Statt der Ausnehmung 11, wie in den Fig. 4 und 7 dargestellt, eine rechteckige Querschnittsform zu geben, ist es vorteilhafter, eine U-förmige Querschnittsform gemäß Fig. 6 zu wählen. Eine noch bessere Wärmeübertragung zwischen dem Rohrabschnitt 20 und der Fühlerspitze 9 wird durch Einkerbungen 23 und 24, gemäß Fig. 5 erreicht, die in den beiden Randfederschenkeln 26 und 27 der Ausnehmung 11 außenseitig angebracht sind. Durch diese wird eine weitergehende berührende Umschließung der Fühlerspitze 9 durch das Material des Rohrwandabschnitts 20 und somit auch eine wesentlich bessere Wärmeübertragung zwischen diesen beiden Teilen erreicht. Die Querschnitte der Ausnehmung 11 und der Fühlerspitze 9 sind dabei einander berührungsschlüssig angepasst.

Bei dem Ausführungsbeispiel der Fig. 8 bis 11 ist der frei geschnittene Rohrwandabschnitt 20 durch einen zwischen den beiden Einschnitten 21 und 22 liegenden Verbindungssteg 25 mit der Rohrwand 2' verbunden. Dieser Verbindungssteg 25 weist gegenüber der Dicke der Rohrwand 2' einen verringerten Querschnitt auf. Erzeugt wird dieser Verbindungssteg 25 mit dem verringerten Querschnitt durch die Einbringung einer Quernut 27. Durch diese Querschnittsverringerung erreicht man eine weitergehende thermische Entkopplung des Rohrwandabschnittes 20 vom Hohlkörper 2 bzw. von dessen Rohrwand 2'. Außerdem lässt sich durch diese Querschnittsverringerung der Rohrwandabschnitt 20 leichter radial nach innen biegen, um einen besseren Wärmeübergang zwischen der Kunststoffspritzdüse 17 und der Fühlerspitze 9 zu ermöglichen.

Wenn die Ausnehmung 11 einen U-förmigen Querschnitt aufweist, ist es auch möglich, die ursprünglich geraden Federschenkelenden gegeneinander formschlüssig um die Führungsspitze 9 zu biegen, um mit einer größeren Berührungsfläche einen besseren Kontaktschluss und somit eine bessere Wärmeübertragung zwischen dem Wandabschnitt 20 und der Fühlerspitze 9 zu erhalten.

Zugleich wird durch eine derartige berührungsschlüssige Verbindung eine dauerhafte Fixierung der Fühlerspitze 9 in der Ausnehmung 11 geschaffen.

Eine ausreichend wirksame thermische Entkopplung des Rohrwandabschnitts 20 vom übrigen Hohlkörper 2 bzw, der Rohrwand 2' wird erreicht, wenn die Einschnitte 21 und 22 jeweils eine Breite b aufweisen, die wenigstens der halben Dicke d der Rohrwand 2' entspricht.

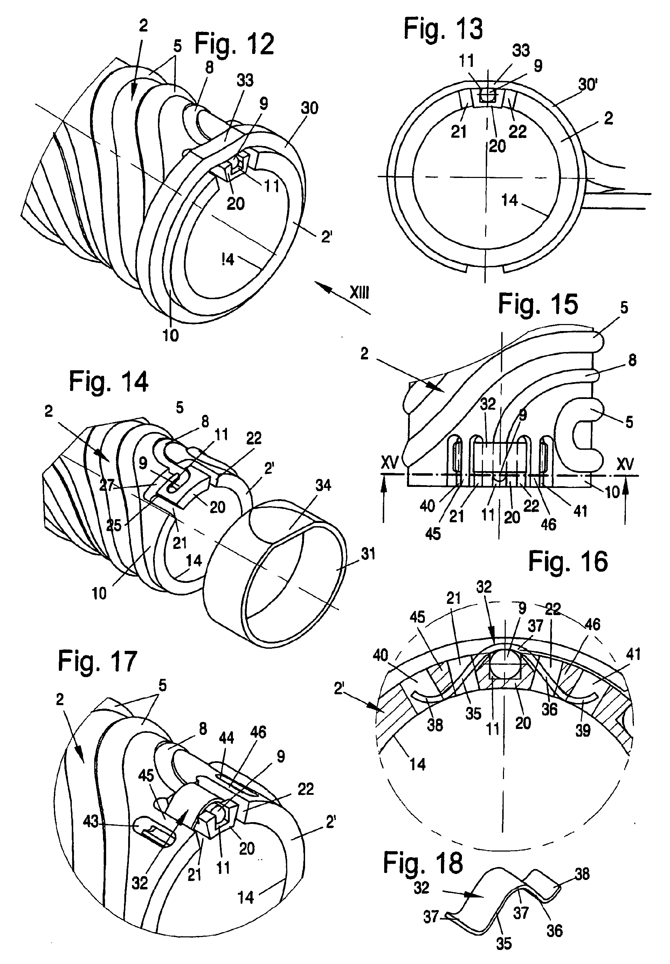

In den Fig. 12 bis 17 sind Ausführungsbeispiele dargestellt, bei denen die radiale Anpresskraft, welche den frei geschnittenen Rohrwandabschnitt 20 zusammen mit der in seiner Ausnehmung 11 untergebrachten Fühlerspitze 9 radial nach innen drückt, von einem Federelement ausgeübt wird. Dieses Federelement kann beispielsweise gemäß den Fig. 12 und 13 aus einem Spannring 30 oder gemäß Fig. 14 aus einer Spannhülse 31 bzw. gemäß nach Fig. 15, 16 und 17 aus einem wellenartig oder bügelartig geformten Federblech 32 bestehen.

Der Spannring 30 kann als geschlossener Ring ausgebildet und im Bereich des Rohrwandabschnitts 20 mit einer radialen Abflachung oder Einbiegung 33 versehen sein. Es besteht aber auch die Möglichkeit, einen unterseitig offenen Spannring 30' gemäß Fig. 13 zu verwenden, dessen (im Beispiel) oberseitige Einbiegung 33 den Rohrwandabschnitt 20 federnd nach innen drückt.

Gleichwirkend könnte auch eine den Umfang des Hohlkörpers 2 im Bereich seines Endabschnittes 10 über mehr als 180° umschließende Ringklammer aus Federblech mit einer der Abflachung oder Einbiegung entsprechenden Formgebung vorgesehen sein.

Wie aus Fig. 14 ersichtlich ist, ist auch die Spannhülse 31 mit einer Abflachung 34 versehen, durch welche auf den frei geschnittenen Rohrwandabschnitt 20 und die in seiner Ausnehmung 11 liegende Fühlerspitze 9 die radiale Anpresskraft ausgeübt wird, wenn die Spannhülse 31 auf den Endabschnitt 10 des Hohlkörpers 2 aufgeschoben ist. Bei dieser Ausführung ist die Ausnehmung 11 mit der eingelegten bzw. eingepressten Fühlerspitze 9 so angeordnet, dass sie sich in Umfangsrichtung erstreckt. Der Wandabschnitt 20 hat dabei eine größere Breite als bei den anderen Ausführungsbeispielen.
Gerade bei dieser Ausführungsform mit dem breiteren Rohrwandabschnitt 20 kann es besonders vorteilhaft sein, den durch die Quernut 27 erzeugten Verbindungssteg 25 mit dem verringerten Querschnitt vorzusehen, um einerseits eine stärker wirksame thermische Entkoppelung zum Hohlkörper 2 und andererseits eine höhere Biegsamkeit zu erreichen.

Das in den Fig. 15 bis 18 dargestellte, als Federelement dienende Federblech 32 ist einstückig hergestellt. Es weist zwei annähernd rechtwinklig oder spitzwinklig zueinander verlaufende gerade Federschenkel 35 und 36 auf, die durch einen Rundbogen 37 federnd miteinander verbunden sind. Die Enden 38 und 39 der Federschenkel 35 und 36 sind jeweils nach außen bzw. rückwärts gebogen. Im eingebauten Zustand des Federbleches 32 durchragen dessen Federschenkel 35 und 36 jeweils die Einschnitte 21 und 22, wobei der Rundbogen 37 den Rohrwandabschnitt 20 mit der darin gelagerten Fühlerspitze 9 außenseitig umschließt und dabei eine radial nach innen gerichtete Anpresskraft ausübt. Für die Aufnahme der nach außen gebogenen Enden 37 und 38 des Federbleches 32 ist die Rohrwand 2' jeweils mit zusätzlichen Einschnitten 40 und 41 bzw, schlitzförmigen Ausschnitten 43 und 44 versehen, die derart angeordnet sind, dass zwischen den Einschnitten 21 und 22 einerseits und den Einschnitten 40 und 41 bzw. den schlitzförmigen Ausnehmungen 43 und 44 jeweils finger- oder rippenartige Stege 45 und 46 gebildet sind, an welchen sich die Enden 37 und 38 des Federbleches 32 innenseitig federnd abstützen.

Damit die Enden 37 und 38 nicht in die Passbohrung 14 des Hohlkörpers 2 bzw. der Rohrwand 2' hineinragen und auch nicht mit dem Düsenkörper in Berührung kommen, sind die Stege 45 und 46 innenseitig mit entsprechenden Ausschnitten 48 bzw. 49 versehen.

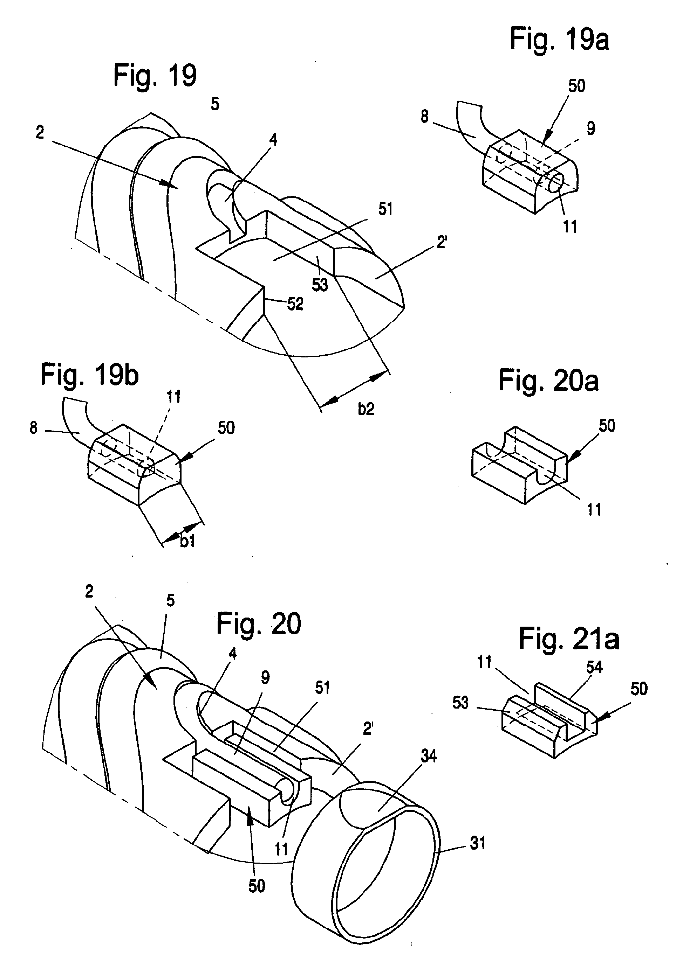

Bei den Ausführungsbeispielen der Fig. 19 bis 26 ist die Ausnehmung 11, welche die Fühlerspitze 9 wenigstens annähernd vollständig wärmeübertragend umschließend aufnimmt, in einem separaten Kontaktelement 50 angeordnet, das räumlich allseitig von der Rohrwand 2' getrennt in einem Wandausschnitt 51 der Rohrwand 2' angeordnet ist.

Dieses Kontaktelement 50 kann, wie die Figuren 20a, 21a sowie 23 bis 27 zeigen, unterschiedliche Querschnittsformen und auch querschnittsmäßig unterschiedliche Ausnehmungen 11 aufweisen. Bei allen Ausführungsformen ist jedoch ein möglichst spaltfreier Berührungskontakt vorgesehen, der eine gute Wärmeübertragung von der Kunststoffspritzdüse, d.h. von dem zu erwärmenden Teil einer Spritzgußform oder dgl., zur Fühlerspitze 9 gewährleistet. Außerdem ist die äußere Form dieses Kontaktelementes 50 so gewählt, dass sie in den Wandausschnitt 51 der Rohrwand 2' eingesetzt werden kann, ohne mit der Rohrwand 2' selbst in Berührung zu kommen bzw. von dieser allseits einen ausreichenden Abstand zu haben.

Mit einem solchen separaten Kontaktelement 50 wird eine noch bessere thermische Trennung zwischen dem Hohlkörper 2 bzw. dessen Rohrwand 2' und der Fühlerspitze 9 gewährleistet. Zweckmäßiger Weise ist der Wandausschnitt 51 in der Rohrwand 2' stirnseitig offen und so angeordnet, dass die Führungsnut 4, welche das Thermoelement bzw. den Temperaturfühler 8 führend aufnimmt, zumindest annähernd mittig in den Wandausschnitt 51 mündet, so dass das Kontaktelement 50, wie in Fig. 20 bis 25 dargestellt, ebenfalls mittig in dem Wandausschnitt 51 platziert ist und von den seitlichen Begrenzungsflächen 42 und 43 des Wandausschnittes 51 gleiche Abstände haben kann.

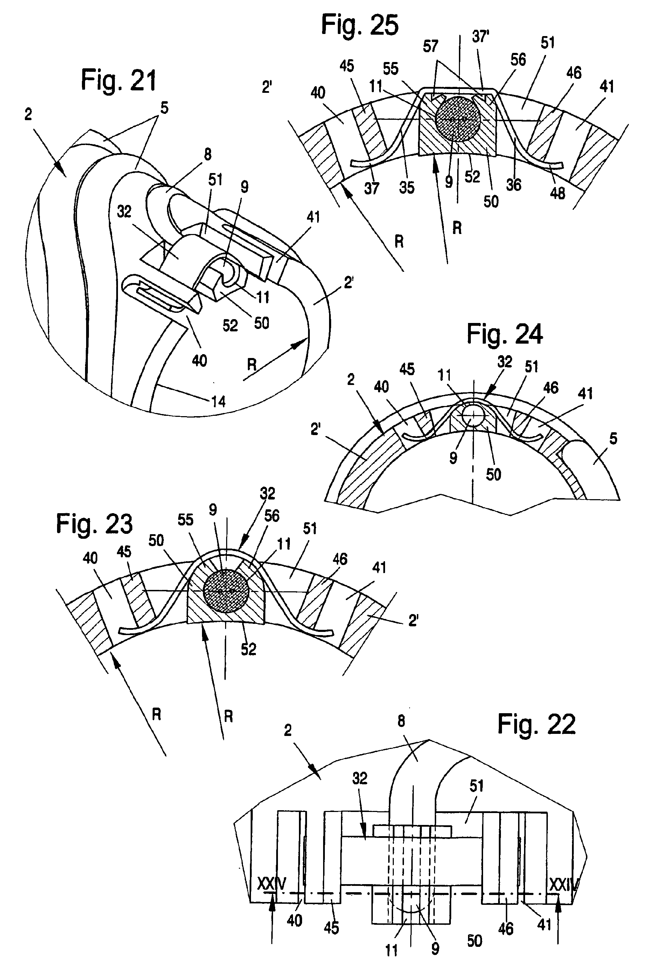

In diesem Falle, wie auch bei anderen Ausführungsbeispielen, verläuft dabei die Fühlerspitze 9 koaxial zur Achse des Hohlkörpers 2. Voraussetzung für die berührungslose Anordnung des Kontaktelements 50 in dem Wandausschnitt 51 ist natürlich, dass die Breite b2 des Wandausschnittes 51 größer ist als die Breite b1 des Kontaktelements 50. Um eine möglichst spaltfreie und flächenhafte, sich über die gesamte Breite b1 erstreckende Berührungsauflage des Kontaktelements 50 auf dem Umfang der Kunststoffspritzdüse 17 zu ermöglichen, ist die Innenfläche 52 des Kontaktelements 50 konkav gewölbt, wobei der Krümmungsradius R (Fig. 23 und 25) demjenigen der Passbohrung 14 des Hohlkörpers 2 entspricht.

Wie aus Fig. 20 ersichtlich ist, kann das Kontaktelement 50 so gestaltet und angeordnet sein, dass es aus dem stirnseitig offenen Wandausschnitt 51 herausragt.

Um zu erreichen, dass das Kontaktelement 50 mit einem gewissen radialen Anpressdruck auf den Umfang der Materialwand 15 der Kunststoffspritzdüse 17 gepresst wird, ist bei der Ausführungsform gemäß Fig. 20 eine Spannhülse 31 mit einer Abflachung 34 vorgesehen, die über das Ende 10 des Hohlkörpers 2 geschoben wird. Bei den Ausführungsformen der Fig. 21 bis 25 sind ähnlich wie bei den Ausführungsformen der Fig. 15 bis 17 als Spannelemente Federbleche 32 vorgesehen. Um solche Federbleche 32 als Spannelemente verwenden zu können, ist es, wie bei den Ausführungsformen der Fig. 15 bis 17 erforderlich, die Rohrwand 2' mit Einschnitten 40 und 41 zu versehen, welche die unteren, nach außen bzw. rückwärts gebogenen Enden 38 und 39 aufnehmen können und die Stege 45 und 46 bilden, an deren Unterseiten sich die Enden 38 und 39 der Federbleche 32 abstützen können.

In der Fig. 25 ist eine Ausführungsform des Federbleches 32 dargestellt, die anstelle des Rundbogens 37 ein flaches Verbindungsstück 37' aufweist, welches die beiden Federschenkel 35 und 36 miteinander verbindet und federnd auf dem Kontaktelement 50 aufliegt.

Wie die Fig. 20a und 21a zeigen, können die Ausnehmungen 11 des Kontaktelements 50 einen U-förmigen oder einen rechteckigen Querschnitt aufweisen. Bei den Ausführungsformen der Fig. 26 und 27 sind die seitlichen oberen Endkanten des Kontaktelements 50 jeweils abgerundet. Bei dem Ausführungsbeispiel der Fig. 21 sind die oberen Endkanten durch schräg verlaufende Phasen 43 und 44 ersetzt, wie das auch bei dem Kontaktelement 50 der Fig. 21 der Fall ist. Beim Kontaktelement 50 der Fig. 25 sind die seitlichen Randstege 55 und 56 der ursprünglich U-förmigen Ausnehmung 11 jeweils mit Einkerbungen 57 versehen, durch welche eine bessere Umschließung der Fühlerspitze erreicht wird. Bei der Ausführungsform der Fig. 23 sind die beiden Randstege 55 und 56 insgesamt gegeneinander nach innen gebogen, um eine weitergehende Umschließung der zylindrischen Fühlerspitze 9 zu erzielen.

Bei den Ausführungsformen der Fig. 19a, 19b und 24 ragt die Fühlerspitze 9 jeweils in eine als Axialbohrung ausgebildete Ausnehmung.11 des in Fig. 19a und Fig. 19b als Einzelteil dargestellten Kontaktelements 50. Die Ausziehmung kann dabei als durchgehende Bohrung (Fig. 19a) oder als Sackbohrung (Fig. 19b) ausgebildet sein. Es kann auch zweckmäßig sein, das Kontaktelement 50 auf der Fühlerspitze 9 radial zu verpressen, um einen optimalen Wärmeübergang zu erzielen. Zugleich wäre damit auch eine gute Fixierung bzw. beständige Verbindung zwischen dem Kontaktelement 50 und der Fühlerspitze 9 gewährleistet. Eine kraftschlüssige Fixierung des Kontaktelements 50 auf der Fühlerspitze 9 kann auch dadurch erreicht werden, dass der gut wärmeleitende Werkstoff des Kontaktelements 50 einen kleineren Wärmeausdehnungskoeffizienten aufweist als der Werkstoff des Metallmantels der Fühlerspitze.

Bei allen dargestellten und beschriebenen Ausführungsbeispielen ist die Fühlerspitze 9 wärmeübertragend eingebettet in eine Ausnehmung 11 eines Wandabschnitts 20 des Hohlkörpers bzw. eines Kontaktelements 50, die von dem die "Heizung" tragenden Hohlkörper weitgehend thermisch getrennt sind, jedoch eine gute Wärmeübertragung vom Messpunkt der Kunststoffspritzdüse 17 zur Fühlerspitze gewährleisten. Dabei kann die Querschnittsform sowohl der Ausnehmung 11 als auch des Wandabschnitts 20 bzw. des Kontaktelements 50 zweckentsprechend variieren.

## Patentansprüche

1. Heizelement, für metallene Kunststoffspritzdüsen, bestehend aus einem rohrartigen Hohlkörper (2) aus Metall, der den Düsenkörper einer Spritzgießeinrichtung, mit seiner Rohrwand wärmeübertragend umschließen kann und der in seiner äußeren und/oder inneren Mantelfläche eine oder mehrere zumindest abschnittweise gewindeartig verlaufende Nuten (3, 4) mit eingelegtem(n) und/oder eingepresstem(n) Rohrheizkörper(n) (5) aufweist, deren elektrische Anschlüsse (6, 7) vom Hohlkörper (2) wegragen, und mit einem Thermoelement als Temperaturfühler (8), das in einer Führungsnut (4) der Rohrwand geführt ist und dessen Fühlerspitze (9) in einem Endbereich der Rohrwand so angeordnet ist, dass sie mit der Materialwand (15) der Kunststoffspritzdüse (17) in thermischem Kontakt stehen kann,
**dadurch gekennzeichnet,**
**dass** die Fühlerspitze (9) in einer nutartigen Ausnehmung (11) eines Rohrwandabschnitts (20) wärmeübertragend fixiert ist, der durch wenigstens zwei stirnseitige Einschnitte (21,22) seitlich von der Rohrwand (2') thermisch getrennt ist und der radial biegsam unter einer radialen Anpresskraft stehend mit flächenhaftem thermischem Kontakt spaltfrei am Düsenkörper (15) anliegen kann.

2. Heizelement nach Anspruch 1, **dadurch gekennzeichnet, dass** die Ausnehmung (11) des radial biegsamen Rohrwandabschnitts (20) den Endabschnitt der in der Umfangsfläche der Rohrwand (2') verlaufenden Führungsnut (4) des Thermoelements (8) bildet.

3. Heizelement nach Anspruch 1 oder 2, **dadurch gekennzeichnet, dass** die Querschnitte der Ausnehmung (11) und der Fühlerspitze (9) einander berührungsschlüssig angepasst sind.

4. Heizelement nach Anspruch 1, **dadurch gekennzeichnet, dass** der radial biegsame Rohrwandabschnitt (20) durch einen zwischen den beiden Einschnitten (21, 22) liegenden Steg (25) mit der Rohrwand (2') verbunden ist, der einen verringerten Querschnitt aufweist.

5. Heizelement nach Anspruch 1, **dadurch gekennzeichnet, dass** die Einschnitte (21, 22) jeweils eine Breite (b) aufweisen, die wenigstens der halben Dicke (d) der Rohrwand entspricht.

6. Heizelement nach Anspruch 5 **dadurch gekennzeichnet, dass** die Ausnehmung (11) einen U-förmigen Querschnitt aufweist und dass die ursprünglich geraden Schenkelenden (26) gegeneinander formschlüssig um die Fühlerspitze (9) gebogen sind.

7. Heizelement nach einem der Ansprüche 1 bis 6 **dadurch gekennzeichnet, dass** die Fühlerspitze (9) und/oder der radial biegsame Rohrwandabschnitt (20) mit ihrer bzw. mit seiner radialen Außenseite an einem Federelement (30, 31, 32) anliegt bzw. anliegen, das sich an der Rohrwand abstützt und einen radial nach innen gerichteten Druck auf den biegsamen Rohrwandabschnitt (20) und/oder die Fühlerspitze (9) ausübt.

8. Heizelement nach Anspruch 7 **dadurch gekennzeichnet, dass** das Federelement aus einem wellenartig geformten Federblech (32) besteht, das durch die beiden Einschnitte (21, 22) verläuft und dessen Enden sich innenseitig an der Rohrwand abstützen.

9. Heizelement nach Anspruch 7 **dadurch gekennzeichnet, dass** das Federelement aus einem den Endabschnitt (10) der Rohrwand (2') und den radial biegsamen Rohrwandabschnitt (20) umschließenden Spannring (30) oder einer Spannhülse (31) besteht.

10. Heizelement, für metallene Kunststoffspritzdüsen, bestehend aus einem rohrartigen Hohlkörper (2) aus Metall, der den Düsenkörper einer Spritzgießeinrichtung, mit seiner Rohrwand wärmeübertragend umschließen kann und der in seiner äußeren und/oder inneren Mantelfläche eine oder mehrere zumindest abschnittweise gewindeartig verlaufende Nuten (3, 4) mit eingelegtem(n) und/oder eingepresstem(n) Rohrheizkörper(n) (5) aufweist, deren elektrische Anschlüsse (6, 7) vom Hohlkörper (2) wegragen, und mit einem Thermoelement als Temperaturfühler (8), das in einer Führungsnut (4) der Rohrwand geführt ist und dessen Fühlerspitze (9) in einem Endbereich der Rohrwand so angeordnet ist, dass sie mit der Materialwand (15) der Kunststoffspritzdüse (17) in thermischem Kontakt stehen kann, wobei die Fühlerspitze (9) in einer ihren Umfang wenigstens größtenteils wärmeübertragend umschließenden Ausnehmung (11) eines separaten Kontaktelements (50) angeordnet ist, das räumlich allseitig von der Rohrwand (2') getrennt in einem Wandausschnitt (51) der Rohrwand (2') angeordnet ist, wobei das Kontaktelement (50) aus einem formbeständigen Werkstoff mit guter Wärmeleitfähigkeit, insbesondere einem Metall, besteht, **dadurch gekennzeichnet, dass** das Kontaktelement (5) unter einer radialen Anpresskraft stehend mit flächenhaftem thermischem Kontakt spaltfrei am Umfang des Düsenkörpers (15) anliegen kann.

11. Heizelement nach Anspruch 10, **dadurch gekennzeichnet, dass** der Wandausschnitt der Rohrwand (2') stirnseitig offen ist und das separate Kontaktelement (50) stirnseitig aus dem Wandausschnitt (51) der Rohrwand (2') herausragt.

12. Heizelement nach Anspruch 10, **dadurch gekennzeichnet, dass** die Ausnehmung (11) des separaten Kontaktelements (50) als Bohrung, insbesondere als Sackbohrung, ausgebildet ist und in Verlängerung der Führungsnut (4) des Thermoelements (8) verläuft.

13. Heizelement nach Anspruch 10, **dadurch gekennzeichnet, dass** das separate Kontaktelement (50) aus einem Werkstoff besteht, dessen Wärmeausdehnungskoeffizient kleiner ist als der Wärmeausdehnungskoeffizient der Fühlerspitze (9).

14. Heizelement nach einem der Ansprüche 10 bis 13, **dadurch gekennzeichnet, dass** das separate Kontaktelement (50) mit der Fühlerspitze (9) verpresst ist.

## Claims

1. A heating element for metallic plastics material injection nozzles, comprising a tube-like hollow body (2) of metal which can enclose the nozzle body of an injection moulding device with its tube wall in a thermally conductive manner and which in its outer and/or inner cylinder surface has one or more grooves (3, 4) extending at least locally in the manner of a thread and having an inlaid and/or impressed tubular heating body or bodies (5), the electrical terminals (6, 7) of which project away from the hollow body (2), and with a thermal element as a temperature sensor (8) which is guided in a guide groove (4) of the tube wall and the sensor tip (9) of which is situated in an end region of the tube wall in such a way that it can be in thermal contact with the material wall (15) of the plastics material injection nozzle (17), **characterized in that** the sensor tip (9) is fixed in a thermally conductive manner in a groove-like recess (11) in a portion (20) of the tube wall which is separated thermally at the side of the tube wall (2') by at least two indentations (21, 22) on the end face and which can rest upright in a radially flexible manner under a radial pressing force with areal thermal contact without a gap against the nozzle body (15).

2. A heating element according to claim 1, **characterized in that** the recess (11) of the radially flexible portion (20) of the tube wall forms the end portion of the guide groove (4) of the thermal element (8) extending in the peripheral face of the tube wall (2').

3. A heating element according to claim 1 or 2, **characterized in that** the cross-sections of the recess (11) and the sensor tip (9) are adapted to each other with positive contact.

4. A heating element according to claim 1, **characterized in that** the radially flexible portion (20) of the tube wall is connected to the tube wall (2') by a web (25) which is situated between the two indentations (21, 22) and which has a reduced cross-section.

5. A heating element according to claim 1, **characterized in that** the indentations (21, 22) have in each case a width (b) which corresponds to at least half the thickness (d) of the tube wall.

6. A heating element according to claim 5, **characterized in that** the recess (11) has a U-shaped cross-section, and the originally straight arm ends (26) are bent towards each other in a positively locking manner around the sensor tip (9).

7. A heating element according to any one of claims 1 to 6, **characterized in that** the sensor tip (9) and/or the radially flexible portion (20) of the tube wall rests or rest with its or their radial outer side against a spring element (30, 31, 32) which is supported on the tube wall and which exerts a pressure directed radially inwards upon the flexible portion (20) of the tube wall and/or the sensor tip (9).

8. A heating element according to claim 7, **characterized in that** the spring element comprises a spring plate (32) which has a corrugated shape and which extends through the two indentations (21, 22) and the ends of which are supported on the inside on the tube wall.

9. A heating element according to claim 7, **characterized in that** the spring element comprises a clamping ring (30) or a clamping sleeve (31) which surrounds the end portion (10) of the tube wall (2') and the radially flexible portion (20) of the tube wall.

10. A heating element for metallic plastics material injection nozzles, comprising a tube-like hollow body (2) of metal which can enclose the nozzle body of an injection moulding device with its tube wall in a thermally conductive manner and which in its outer and/or inner cylinder surface has one or more grooves (3, 4) extending at least locally in the manner of a thread and having an inlaid and/or impressed tubular heating body or bodies (5), the electrical terminals (6, 7) of which project away from the hollow body (2), and with a thermal element as a temperature sensor (8) which is guided in a guide groove (4) of the tube wall and the sensor tip (9) of which is situated in an end region of the tube wall in such a way that it can be in thermal contact with the material wall (15) of the plastics material injection nozzle (17), wherein the sensor tip (9) is arranged in a recess (11) - surrounding the periphery thereof at least mostly in a thermally conductive manner - of a separate contact element (50) which is arranged spatially separated on all sides from the tube wall (2') in a wall portion (51) of the tube wall (2'), wherein the contact element (50) consists of a dimensionally stable material with good thermal conductivity, in particular a metal, **characterized in that** the contact element (5) [sic] can rest upright under a radial pressing force with areal thermal contact without a gap against the periphery of the nozzle body (15).

11. A heating element according to claim 10, **characterized in that** the wall portion of the tube wall (2') is open on the end face and the separate contact element (50) projects out of the wall portion (51) of the tube wall (2') on the end face.

12. A heating element according to claim 10, **characterized in that** the recess (11) of the separate contact element (50) is designed in the form of a bore, in particular in the form of a blind bore, and extends as a continuation of the guide groove (4) of the thermal element (8).

13. A heating element according to claim 10, **characterized in that** the separate contact element (50) consists of a material of which the coefficient of thermal expansion is less than the coefficient of thermal expansion of the sensor tip (9).

14. A heating element according to any one of claims 10 to 13, **characterized in that** the separate contact element (50) is pressed together with the sensor tip (9).

## Revendications

1. Elément chauffant pour une buse métallique d'injection de matière plastique composée d'un corps creux (2), tubulaire en métal, entourant le corps de buse d'une installation d'injection avec sa paroi tubulaire et dont la surface enveloppe extérieure et/ou intérieure comporte une ou plusieurs rainures (3, 4) ayant au moins par segment, un tracé en hélice et dans lesquelles est (sont) placé(s) et/ou enfoncé(s) un (des) corps de chauffe tubulaire(s) (5) dont les branchements électriques (6, 7) viennent en saillie du corps tubulaire (2) ainsi qu'un thermoélément comme capteur de température (8) guidé dans une rainure de guidage (4) de la paroi tubulaire et dont la pointe de palpeur (9) est installée dans la zone d'extrémité de la paroi tubulaire pour qu'elle soit en contact thermique avec la paroi de matériau (15) de la buse d'injection de matière plastique (17),
élément chauffant **caractérisé en ce que**
- la pointe de palpeur (9) est fixée dans une cavité en forme de rainure (11) d'un segment de paroi tubulaire (20) de manière à conduire la chaleur, le segment de paroi tubulaire étant séparé thermiquement par au moins deux encoches frontales (21, 22) latéralement de la paroi tubulaire (2') et il est radialement souple sous l'effet d'une force de compression radiale en s'appuyant sans jeu par un contact thermique surfacique contre le corps de buse (15).

2. Elément chauffant selon la revendication 1,
**caractérisé en ce que**
la cavité (11) du segment de paroi tubulaire (20), radialement souple, forme le segment d'extrémité de la rainure de guidage (4) du thermoélément (8) qui passe dans la surface périphérique de la paroi tubulaire (2').

3. Elément chauffant selon la revendication 1 ou 2,
**caractérisé en ce que**
la section de la cavité (11) et celle de la pointe de palpeur (9) sont adaptées de façon à s'ajuster par contact.

4. Elément chauffant selon la revendication 1,
**caractérisé en ce que**
le segment de paroi tubulaire (20) radialement souple, est relié à la paroi tubulaire (2') par une entretoise (25) entre les deux encoches d'extrémité (21, 22), cette entretoise ayant une section réduite.

5. Elément chauffant selon la revendication 1,
**caractérisé en ce que**
les encoches (21, 22) ont chacune une largeur (b) qui correspond au moins à la demi-épaisseur (d) de la paroi tubulaire.

6. Elément chauffant selon la revendication 5,
**caractérisé en ce que**
la cavité (11) a une section en forme de U, et
- les extrémités de branches (26) à l'origine droites, sont cintrées l'une par rapport à l'autre en entourant la pointe de palpeur (9) par une liaison par la forme.

7. Elément chauffant selon l'une des revendications 1 à 6,
**caractérisé en ce que**
la pointe de palpeur (9) et/ou le segment de paroi tubulaire (20) souple radialement, s'appliquent par son ou ses côtés radiaux extérieurs contre un élément de ressort (30, 31, 32), qui s'appuie contre la paroi tubulaire et exerce une poussée dirigée radialement vers l'intérieur sur le segment de paroi tubulaire souple (20) et/ou la pointe de palpeur (9).

8. Elément chauffant selon la revendication 7,
**caractérisé en ce que**
l'élément de ressort est un élément de tôle élastique (32) de forme ondulée, qui traverse les deux encoches (21, 22) et dont les extrémités s'appuient sur le côté intérieur de la paroi tubulaire.

9. Elément chauffant selon la revendication 7,
**caractérisé en ce que**
l'élément de ressort est une bague de serrage (30) entourant le segment d'extrémité (10) de la paroi tubulaire (2') et le segment de paroi tubulaire (20) souple radialement ou encore un manchon de serrage (31).

10. Elément chauffant pour une buse métallique d'injection de matière plastique composée d'un corps creux (2), tubulaire en métal, entourant le corps de buse d'une installation d'injection avec sa paroi tubulaire et dont la surface enveloppe extérieure et/ou intérieure comporte une ou plusieurs rainures (3, 4) ayant au moins par segment, un tracé en hélice et dans lesquelles est (sont) placé(s) et/ou enfoncé(s) un (des) corps de chauffe tubulaire(s) (5) dont les branchements électriques (6, 7) viennent en saillie du corps tubulaire (2) ainsi qu'un thermoélément comme capteur de température (8) guidé dans une rainure de guidage (4) de la paroi tubulaire et dont la pointe de palpeur (9) est installée dans la zone d'extrémité de la paroi tubulaire pour qu'elle soit en contact thermique avec la paroi de matériau (15) de la buse d'injection de matière plastique (17),
* la pointe de palpeur (9) est installée dans une cavité (11) qui entoure au moins la plus grande partie de sa périphérie de manière thermiquement conductrice, cette cavité appartenant à un élément de contact (50) distinct, séparé en volume, de tous côtés de la paroi tubulaire (2') en étant logé dans une découpe (51) de la paroi tubulaire (2'),
* l'élément de contact (50) étant en un matériau de forme fixe, ayant une bonne conductivité thermique, notamment un métal,
élément chauffant **caractérisé en ce que** l'élément de contact (5) peut s'appliquer sous l'effet d'une poussée radiale droite, avec un contact thermique surfacique, sans laisser d'intervalle contre la périphérie du corps de buse (15).

11. Elément chauffant selon la revendication 10,
**caractérisé en ce que**
la découpe de la paroi tubulaire (2') est ouverte du côté frontal et l'élément de contact (50) distinct, dépasse du côté frontal de la découpe (51) de la paroi tubulaire (2').

12. Elément chauffant selon la revendication 10,
**caractérisé en ce que**
la cavité (11) de l'élément de contact (50), séparé, est un perçage notamment un perçage borgne dans le prolongement de la rainure de guidage (4) du thermoélément (8).

13. Elément chauffant selon la revendication 10,
**caractérisé en ce que**
l'élément de contact (50) séparé, est en un matériau dont le coefficient de dilatation thermique est inférieur au coefficient de dilatation thermique de la pointe de palpeur (9).

14. Elément chauffant selon l'une des revendications 10 à 13,
**caractérisé en ce que**
l'élément de contact (50) séparé est comprimé avec la pointe de palpeur (9).
